# EUROPEAN PATENT SPECIFICATION

(11) **EP 3 161 350 B1**
(45) Date of publication and mention of the grant of the patent: **04.04.2018**
(21) Application number: 15757327.0
(22) Date of filing: 26.06.2015
(51) Int. Cl.: F16H 55/36

(54) **A FILTERING PULLEY FOR A BELT DRIVE**
FILTRIERRIEMENSCHEIBE FÜR EINEN RIEMENTRIEB
POULIE DE FILTRAGE POUR UN MÉCANISME D'ENTRAÎNEMENT À COURROIE

(30) Priority: 27.06.2014 IT TO20140519
(43) Date of publication of application: 03.05.2017
(73) Proprietor: DAYCO EUROPE S.r.l., 66100 Chieti (IT)
(72) Inventor: LICATA, Federico, I-10020 Pecetto Torinese (IT); BARATELLI, Silvia, I-66100 Chieti (IT); CARICCIA, Gianluca, I-10100 Torino (IT)
(74) Representative: Franzolin, Luigi
(86) International application number: PCT/IB2015/054821
(87) International publication number: WO 2015/198277

(56) References cited:
- WO-A1-2007/121582
- WO-A1-2012/061930
- DE-A1-102009 038 221

## Description

### TECHNICAL FIELD

The present invention relates to a filtering pulley, in particular for a belt drive of an internal combustion engine for a motor vehicle.

The present invention finds preferred, although non-exclusive, application in a driving pulley for an alternator of an internal combustion engine. Reference will be made hereinafter to this application by way of example, although it is clear that the pulley of the invention can be used as a drive pulley connected to the driveshaft or as a driven pulley drawn in rotation by any other accessory of the engine, for example a reversible electric machine with the functions of generator and starter motor.

### BACKGROUND ART

The use of a filtering pulley is known in motor vehicles for driving the alternator via the accessories drive belt.

This pulley comprises a hub designed to be connected to the rotor of the alternator, an annular pulley ring provided with a profile suitable for cooperating with the belt and a filtering unit interposed between the hub and the pulley ring of the pulley to avoid subjecting the belt to dynamic overloads in the presence of torsional vibration on the driveshaft or rapid changes in engine speed.

The filtering unit generally comprises a spring, for example a spiral or coil spring, or a plurality of springs or other elastic elements arranged circumferentially between the hub and the pulley ring.

In addition, since the alternator has a relatively high equivalent inertia and tends to drive the pulley when there are instantaneous speed drops on the driveshaft, it is known to incorporate a freewheel in the filtering unit designed to unidirectionally transmit the motion of the pulley ring to the hub (normal operating condition) and decouple the hub from the pulley ring in the event of torque reversal. The freewheel can be implemented, for example, by means of a strip spring carried by one of either the hub or the pulley ring and designed to expand or contract according to the direction of the torque, to cooperate with, or decouple from, a corresponding annular friction surface integral with the other of either the hub or the pulley ring.

The introduction of start-stop systems, in which a reversible electric machine having the function of starter motor or alternator according to operating conditions is used instead of the alternator, makes the use of a filtering pulley with a freewheel impossible, because this would decouple the electric machine from the belt drive when the former acts as a motor.

Solutions have been proposed to overcome this problem in which the filtering unit comprises a spring constrained at its ends to respective elements coupled to the hub and to the pulley, respectively, with a relative freedom of rotation of predetermined excursion.

These solutions are suitable both for start-stop systems and conventional transmission systems. However, in some applications, providing for a relative angle of free rotation between hub and pulley of predetermined excursion, beyond which there is anyway a permanent rotational coupling between pulley ring and hub, may be insufficient to achieve the desired technical performance.

Example of known filtering pulleys are disclosed in WO2012061930 A1, WO2007/121582 A1 or DE102009038221 A1.

### DISCLOSURE OF INVENTION

The object of the present invention is a filtering pulley utilizable both in a start-stop system and in a conventional transmission system, which enables overcoming the problems of known filtering pulleys described above.

Another object of the present invention is to provide a filtering pulley that is compact and inexpensive to manufacture.

The above-stated objects are achieved by a filtering pulley according to claim 1.

### BRIEF DESCRIPTION OF THE DRAWINGS

For a better understanding of the present invention, a preferred embodiment is described below, by way of non-limitative example and with reference to the accompanying drawings, in which:
Figure 1 is an axial cross-section of a pulley according to the invention;
Figure 2 is an exploded perspective view of the pulley in Figure 1;
Figure 3 is a perspective view of first element of the pulley;
Figure 4 is a perspective view of second element of the pulley;
Figure 5 is a diagram showing a first operating phase of the pulley of the invention;
Figure 6 is a diagram showing a second operating phase of the pulley of the invention; and
Figure 7 is a graph showing the torque transmitted as a function of the relative angle of rotation between a pulley ring and the hub of the pulley.

### BEST MODE FOR CARRYING OUT THE INVENTION

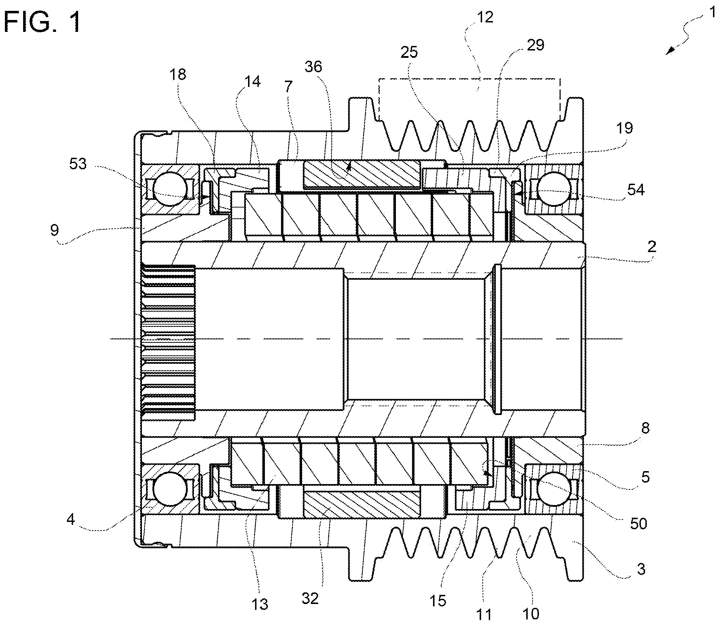

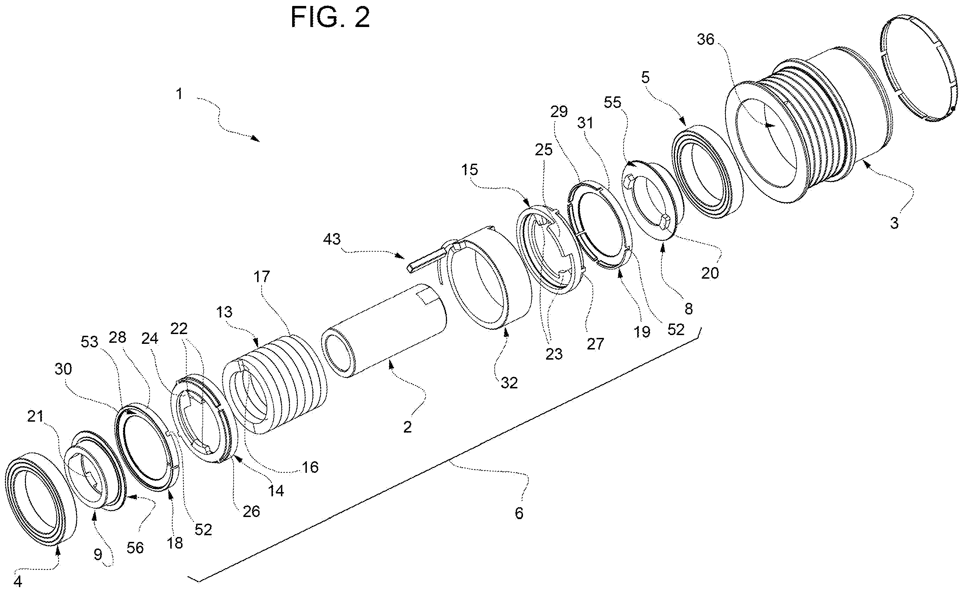

With reference to Figures 1 and 2, a pulley 1 is shown, basically comprising a tubular hub 2, a tubular pulley ring 3 externally coaxial with the hub 2 and supported in a rotationally free manner on the hub 2 by a pair of end bearings 4 and 5, and a transmission torque filtering unit 6 interposed between the hub 2 and the pulley ring 3 and housed in an annular chamber 7 contained radially between them and axially between the bearings 4 and 5.

The bearings 4 and 5 are conveniently mounted on respective end headers 8 and 9 fixed on the hub 2.

The pulley ring 3 is provided with an intermediate annular portion 10, which externally has a multi-groove profile 11 designed to cooperate with a poly-V belt 12 (a section of which is indicated schematically in Figure 1).

The hub 2 is designed to be rigidly fixed to a shaft, not shown, of an accessory member of an internal combustion engine, for example an alternator or a reversible electric machine with the functions of alternator and starter motor in a start-stop system.

The filtering unit 6 basically comprises a torsion spring 13, preferably a coil spring with rectangular-section wire stock, a pair of spring-holder elements 14 and 15, or carriers, cooperating with respective ends 16 and 17 of the spring 13 and a pair of damping rings 18 and 19, each one axially interposed between a respective carrier 14 or 15 and a respective header 8 or 9.

The headers 8 and 9 are provided with respective pairs of axial ridges 20 and 21, diametrically opposite each other and extending towards the respective carriers 14 and 15 (Figure 2) .

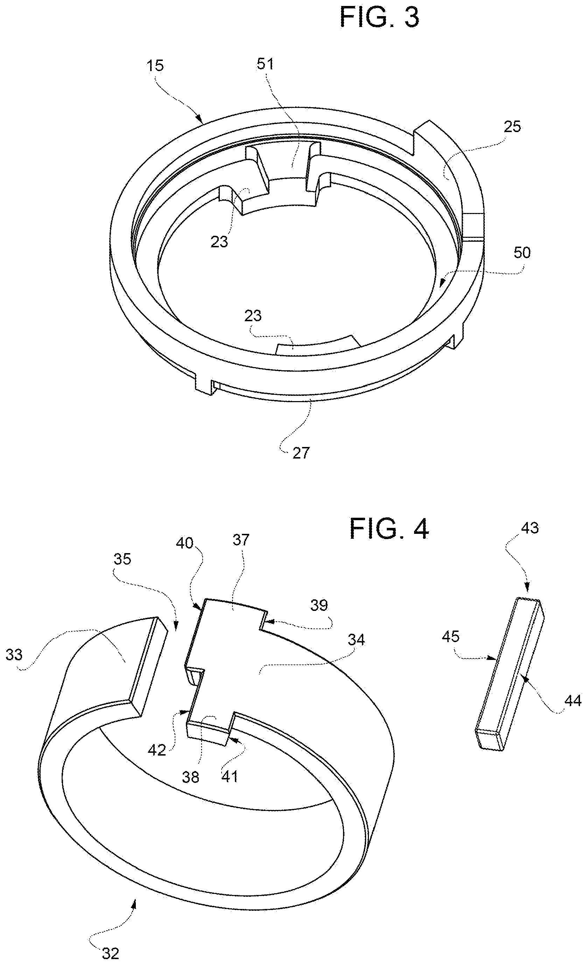

The carriers 14 and 15 (Figure 3) have an annular shape and define a flat annular contact surface 50 for a respective end of the spring 13, from which an axially projecting ridge 51 extends to form the angular stop of the spring. The carriers 14 and 15 are also provided with respective pairs of inner radial ridges 22 and 23 designed to interact with respective ridges 20 and 21 of the headers 8 and 9. The carriers 14 and 15 are also provided with respective axial ridges 24 and 25 extending into the annular chamber 7.

In this way, the carriers 14 and 15 are rotationally coupled to the hub 2 with a free angle of rotation of just under than 180°.

The dampers 18 and 19 are substantially rings made of a polymeric material and are axially interposed between the carriers 10 and 11 and the headers 15 and 16. On the side facing the respective carrier, the dampers 18 and 19 have a raised outer edge 28 and 29 provided with a series of angularly evenly spaced notches 52. This edge couples with respective external grooves 26 and 27 of the corresponding carrier 14 or 15, from which a series of axial ridges extend that engage with the notches 52 of the damper 18 and 19, making it integral with the carriers 14 and 15.

On the side facing the headers, the dampers 18 and 19 have respective annular surfaces 53 and 54 configured to slidingly cooperate with corresponding surfaces 55 and 56 of the headers 8 and 9.

The pulley 1 further comprises a torque limiting coupling (Figure 4) housed in the annular chamber 7 and basically comprising a strip spring 32 with a substantially open-ring shape and two ends 33 and 34 that delimit a gap 35 between them. The spring 32 is mounted with radial interference inside an annular inner surface 36 of the pulley 3.

The spring 32 has a substantially constant axial dimension for its entire circumferential extension, except for end 34, which has respective axial ridges 37 and 38 facing opposite sides. Ridge 37 has a larger circumferential extension and is delimited by respective surfaces 39 and 40, of which surface 40 faces the gap 35. Ridge 38 has a smaller circumferential extension and is delimited by respective surfaces 41 and 42, of which surface 41 is aligned with surface 39 while surface 42 is further away from end 33 than surface 40.

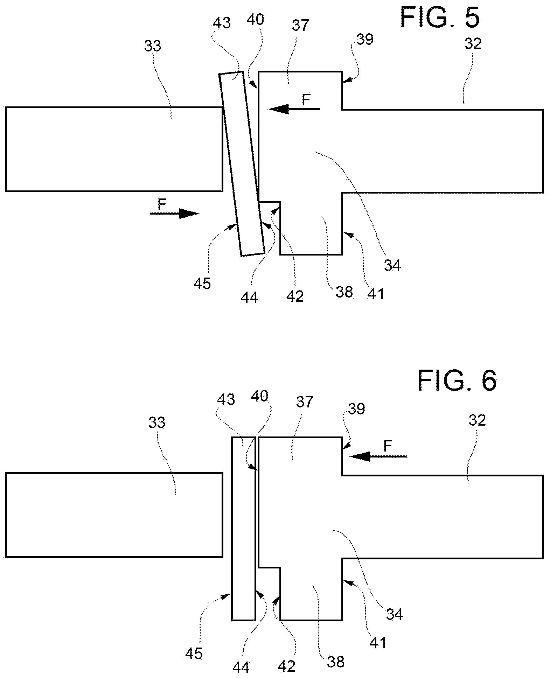

Finally, the torque limiting coupling preferably comprises a lever 43 in the form of an elongated prismatic bar, which is housed in the gap 35 in an axial direction and is designed to cooperate via its respective lateral faces 44 and 45 with the respective ends 33 and 34 of the spring 32, as schematically shown in Figures 5 and 6.

Operation of the pulley 1 is as follows:
In normal conditions, or rather when the pulley ring 3 drawn by the belt 4 drives the hub 2 and therefore tends to outpace it (drive mode), the spring 32 rotates integrally with the pulley ring 3 until the lever 43 meets ridge 24 of carrier 14 and assumes the inclined position shown in Figure 5, where it exerts opposing tangential forces on the ends 33 and 34 so as to increase the radial force-fitting of the spring 32 against the inner surface 36 of the pulley 3. Carrier 14 is thus driven and, in turn, draws the spring 13 and hence carrier 11 until ridges 23 engage with ridges 20 of header 8 integral with the hub 2.

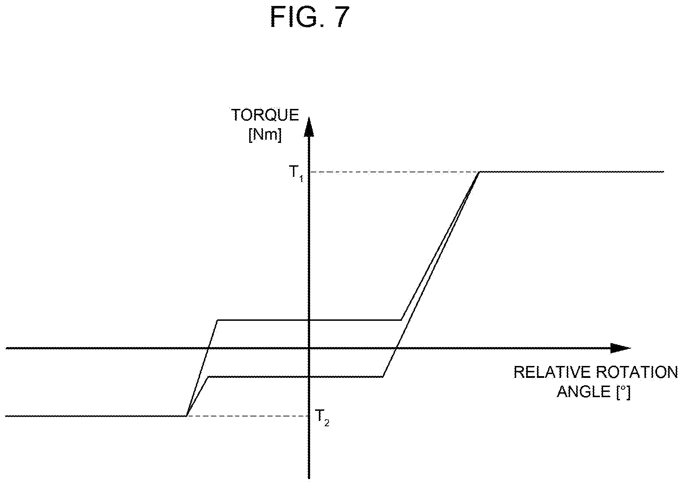

The spring 13 is thus torsionally loaded and transmits the load from the pulley ring 3 to the hub 2. As the transmitted torque increases, so does the torsion of the spring 13. The maximum transmissible torque is defined by the adherence condition between the spring 32 and the surface 36 of the pulley ring 3. When the transmissible torque limit value T1 is exceeded (Figure 7), the spring 32 slips with respect to the surface 36 of the pulley ring 3.

Instead, in the case where the hub 2 tends to outpace the pulley ring 3, torque is transmitted in the opposite direction, namely from header 9 to carrier 14, to the spring 13 and to carrier 15. The latter acts on the surface 39 of the spring 32 via ridge 25, tending to contract it radially and therefore to reduce the radial force-fitting of the spring 32 with respect to the surface 36 of the pulley ring 3.

The transmissible torque in this direction (T2) is therefore decidedly lower than that transmissible in drive mode.

Figure 7 shows a graph of transmitted torque as a function of the relative angle of rotation between pulley ring 3 and hub 2. The absence of torque may be noted in the areas around the origin due to the free angle of rotation, defined by the sum of the free angles of relative rotation between each of the carriers 14 and 15 and the respective headers 8 and 9 and the play between the carriers 14 and 15 (lateral surfaces of ridges 24 and 25) and the spring 32 (surface 39) or the lever 43 (surface 44), according to the direction of torque application.

In drive mode (positive torque), it can be seen that the characteristic grows linearly up to the value of maximum torque T1 defined above.

In the opposite direction, after play is taken up, there is still a linear characteristic, but with uncoupling at a lower torque value T2 with respect to the previous case.

The advantages that can be achieved are evident from examination of the characteristics of the filtering pulley 1. With respect to known solutions that envisage the use of a freewheel, the present invention enables achieving a bidirectional coupling between hub and pulley, at least within a predetermined torque range, making use of the pulley possible in start-stop systems.

With respect to the described solutions that envisage a simple free angle of rotation between pulley ring 3 and hub 2, the present invention enables achieving uncoupling between pulley ring and hub upon exceeding predetermined threshold values for the transmitted torque. These values can be different in the two directions of torque transmission and, in particular, sufficiently high in drive mode and sufficiently low in the condition of one or more accessories outpacing the driveshaft.

Finally, it is clear that modifications and variants can be made to the described pulley 1 without departing from the scope defined in the claims.

In particular, the spring 32 could be coupled to the hub 2 instead of to the pulley ring 3.

The lever 43 could be omitted in the case where adherence between the spring 32 and the surface 36 of the pulley ring 3 (or of the hub 2) in drive mode is sufficient to transmit the required torque.

The pulley can be used as a drive pulley on the driveshaft instead of on the alternator and can also be used on a conventional type of alternator or on any other accessory.

## Claims

1. A filtering pulley (1) for an accessories transmission of an internal combustion engine comprising a hub (2), an annular pulley ring (3) provided with a profile configured to cooperate with a transmission belt (12), externally coaxial with said hub (2) and supported in a rotationally free manner on the hub, and a filtering unit (6) for torque transmission interposed between said hub (2) and said pulley ring (3) and comprising a torsion spring (13), a first carrier (14) constrained to an end (16) of the spring (13), a second carrier (15) constrained to a second end (17) of said spring (13), each of said first and second carriers (14, 15) being rotationally coupled to said hub (2) and to said pulley ring (3) with a relatively limited possibility of rotation, a torque limiting coupling being interposed between said first and second carriers (14, 15) and at least one of either said hub (2) or said pulley ring (3) **characterized in that** said torque limiting coupling comprises a strip spring (32) coupled with interference to one of either said hub (2) or said pulley ring (3).

2. A pulley according to claim 1, **characterized in that** said strip spring (32) is shaped as an open ring with ends (33, 34) separated by a gap (35).

3. A pulley according to claim 2, **characterized in that** said spring (32) has at least one ridge (37, 38) at one of its ends (33, 34) configured to interact with at least one of the said carriers (14, 15).

4. A pulley according to claim 3, **characterized in that** said spring (32) comprises two ridges (37, 38) extending axially from opposite parts of said end.

5. A pulley according to one of claims 1 to 4, **characterized in that** said spring (32) is coupled with radial interference to an inner surface (36) of said pulley ring (3).

6. A pulley according to claim 5, **characterized in that** said torque limiting coupling comprises an actuating element (43) housed in said gap (35) and interacting with said spring (32) under the bias of one of the said carriers (14) to increase the transmissible torque between said pulley ring (3) and said hub (2) .

7. A pulley according to claim 6, **characterized in that** said actuating element is a metal lever (43) configured to expand said spring (32) under the bias of said carrier (14).

8. A pulley according to claim 6 or 7, **characterized in that** said lever (43) is configured to interact with said ends (33, 34) of the spring (32) under the bias of said carrier (14).

9. A pulley according to one of claims 1 to 8, **characterized in that** said carriers (14, 15) have respective first portions (24, 25) configured to interact with the torque limiting coupling and second portions (22, 23) configured to act at least indirectly with the other of either said pulley ring (3) or said hub (2).

10. A pulley according to claim 9, **characterized in that** said spring (32) is coupled to the said pulley ring (3), said second portions (22, 23) of the said carriers (14, 15) being configured to interact with respective elements (8, 9) integral with said hub (2).

11. A pulley according to claim 10, **characterized in that** said elements integral with said hub (2) consist of annular headers (8, 9) on which respective supporting bearings (4, 5) of said pulley ring (3) are mounted.

12. A pulley according to any one of the preceding claims, **characterized in that** it comprises damping means (18, 19) of the relative rotations between said carriers (14, 15) and at least one of either said hub (2) or said pulley ring (3).

## Patentansprüche

1. Filtrierriemenscheibe (1) für eine Zubehörübertragung eines Verbrennungsmotors, umfassend eine Nabe (2), einen ringförmigen Riemenscheibenring (3), der mit einem Profil versehen ist, das zum Zusammenwirken mit einem Getrieberiemen (12) ausgestaltet ist, extern koaxial mit der Nabe (2) und frei drehbar auf der Nabe gelagert, und eine Filtereinheit (6) zur Drehmomentübertragung, die zwischen der Nabe (2) und dem Riemenscheibenring (3) angeordnet ist und eine Torsionsfeder (13) umfasst, sowie einen ersten Träger (14), der an einem Ende (16) der Feder (13) befestigt ist, und einen zweiten Träger (15), der an einem zweiten Ende (17) der Feder (13) befestigt ist, wobei jeder der ersten und zweiten Träger (14, 15) drehfest mit der Nabe (2) und dem Riemenscheibenring (3) mit einer relativ begrenzten Möglichkeit der Drehung verbunden sind, und eine drehmomentbegrenzende Kupplung, die zwischen dem ersten und dem zweiten Träger (14, 15) und zumindest entweder der Nabe (2) oder dem Riemenscheibenring (3) oder beiden angeordnet ist, **dadurch gekennzeichnet, dass** die Drehmomentbegrenzungskupplung eine Streifenfeder (32) umfasst, die entweder an der Nabe (2) oder an dem Riemenscheibenring (3) einwirkend gekoppelt ist.

2. Riemenscheibe nach Anspruch 1, **dadurch gekennzeichnet, dass** die Streifenfeder (32) als ein offener Ring mit Enden (33, 34), die durch einen Spalt (35) getrennt sind, geformt ist.

3. Riemenscheibe nach Anspruch 2, **dadurch gekennzeichnet, dass** die Feder (32) mindestens eine Ausbuchtung (37, 38) an einem ihrer Enden (33, 34) aufweist, die derart ausgestaltet ist, dass sie mit mindestens einem der Träger (14, 15) zusammenwirkt.

4. Riemenscheibe nach Anspruch 3, **dadurch gekennzeichnet, dass** die Feder (32) zwei Ausbuchtungen (37, 38) aufweist, die sich axial von gegenüberliegenden Teilen des Endes erstrecken.

5. Riemenscheibe nach einem der Ansprüche 1 bis 4, **dadurch gekennzeichnet, dass** die Feder (32) mit radial an einer Innenfläche (36) des Riemenscheibenrings (3) einwirkend gekoppelt ist.

6. Riemenscheibe nach Anspruch 5, **dadurch gekennzeichnet, dass** die Drehmomentbegrenzungskupplung ein Betätigungselement (43) umfasst, das in dem Spalt (35) untergebracht ist und mit der Feder (32) unter der Vorspannung eines der Träger (14) zusammenwirkt, um das übertragbare Drehmoment zwischen dem Riemenscheibenring (3) und der Nabe (2) zu erhöhen.

7. Riemenscheibe nach Anspruch 6, **dadurch gekennzeichnet, dass** das Betätigungselement ein Metallhebel (43) ist, der konfiguriert ist, um die Feder (32) unter der Vorspannung des Trägers (14) zu dehnen.

8. Riemenscheibe nach Anspruch 6 oder 7, **dadurch gekennzeichnet, dass** der Hebel (43) derart ausgestaltet ist, dass er mit den Enden (33, 34) der Feder (32) unter der Vorspannung des Trägers (14) zusammenwirkt.

9. Riemenscheibe nach einem der Ansprüche 1 bis 8, **dadurch gekennzeichnet, dass** die Träger (14, 15) jeweilige erste Abschnitte (24, 25) aufweisen, die derart ausgestaltet sind, dass sie mit der Drehmomentbegrenzungskupplung zusammenwirken, und zweite Abschnitte (22, 23), die derart ausgestaltet sind, dass sie zumindest indirekt mit entweder dem Riemenscheibenring (3) oder der Nabe (2) wirken.

10. Riemenscheibe nach Anspruch 9, **dadurch gekennzeichnet, dass** die Feder (32) mit dem Riemenscheibenring (3) gekoppelt ist, wobei die zweiten Abschnitte (22, 23) der Träger (14, 15) so ausgestaltet sind, dass sie mit jeweiligen Elementen (8, 9), die fest mit der Nabe (2) verbunden sind, zusammenwirken.

11. Riemenscheibe nach Anspruch 10, **dadurch gekennzeichnet, dass** die Elemente, die fest mit der Nabe (2) verbunden sind, aus ringförmigen Kopfstücken (8, 9) bestehen, an denen jeweilige Stützlager (4, 5) des Riemenscheibenrings (3) montiert sind.

12. Riemenscheibe nach einem der vorhergehenden Ansprüche, **dadurch gekennzeichnet, dass** sie Dämpfungsmittel (18, 19) für die Relativdrehungen zwischen den Trägern (14, 15) und zumindest entweder der Nabe (2) oder der Riemenscheibenring (3) oder beiden umfasst.

## Revendications

1. Poulie de filtrage (1) pour une transmission d'accessoires d'un moteur à combustion interne comprenant un moyeu (2), une bague de poulie annulaire (3) qui présente un profil qui est configuré de manière à ce qu'il coopère avec une courroie de transmission (12), qui est coaxiale de façon externe audit moyeu (2) et qui est supportée d'une manière libre en rotation sur le moyeu, et une unité de filtrage (6) pour une transmission de couple qui est interposée entre ledit moyeu (2) et ladite bague de poulie (3) et qui comprend un ressort de torsion (13), un premier support (14) qui est contraint sur une extrémité (16) du ressort (13), un second support (15) qui est contraint sur une seconde extrémité (17) dudit ressort (13), chacun desdits premier et second supports (14, 15) étant couplé à rotation audit moyeu (2) et à ladite bague de poulie (3) selon une possibilité de rotation relativement limitée, un couplage de limitation de couple étant interposé entre lesdits premier et second supports (14, 15) et au moins un élément constitutif pris parmi ledit moyeu (2) et ladite bague de poulie (3), **caractérisée en ce que** ledit couplage de limitation de couple comprend un ressort en bande (32) qui est couplé avec une interférence à un élément constitutif pris parmi ledit moyeu (2) et ladite bague de poulie (3).

2. Poulie selon la revendication 1, **caractérisée en ce que** ledit ressort en bande (32) est conformé en tant que bague ouverte munie d'extrémités (33, 34) séparées par un espace (35).

3. Poulie selon la revendication 2, **caractérisée en ce que** ledit ressort (32) comporte au moins une saillie (37, 38) au niveau de l'une de ses extrémités (33, 34) qui est configurée de manière à ce qu'elle interagisse avec au moins l'un desdits supports (14, 15).

4. Poulie selon la revendication 3, **caractérisée en ce que** ledit ressort (32) comprend deux saillies (37, 38) qui s'étendent axialement depuis des parties opposées de ladite extrémité.

5. Poulie selon l'une des revendications 1 à 4, **caractérisée en ce que** ledit ressort (32) est couplé avec une interférence radiale à une surface interne (36) de ladite bague de poulie (3).

6. Poulie selon la revendication 5, **caractérisée en ce que** ledit couplage de limitation de couple comprend un élément d'actionnement (43) qui est logé dans ledit espace (35) et qui interagit avec ledit ressort (32) sous l'effet de la sollicitation par poussée de l'un desdits supports (14) afin d'augmenter le couple transmissible entre ladite bague de poulie (3) et ledit moyeu (2).

7. Poulie selon la revendication 6, **caractérisée en ce que** ledit élément d'actionnement est un levier en métal (43) qui est configuré de manière à ce qu'il étende ledit ressort (32) sous l'effet de la sollicitation par poussée dudit support (14).

8. Poulie selon la revendication 6 ou 7, **caractérisée en ce que** ledit levier (43) est configuré de manière à ce qu'il interagisse avec lesdites extrémités (33, 34) du ressort (32) sous l'effet de la sollicitation par poussée dudit support (14).

9. Poulie selon l'une des revendications 1 à 8, **caractérisée en ce que** lesdits supports (14, 15) comportent des premières parties respectives (24, 25) qui sont configurées de manière à ce qu'elles interagissent avec le couplage de limitation de couple et des secondes parties (22, 23) qui sont configurées de manière à ce qu'elles agissent au moins indirectement avec l'autre élément constitutif pris parmi ladite bague de poulie (3) et ledit moyeu (2).

10. Poulie selon la revendication 9, **caractérisée en ce que** ledit ressort (32) est couplé à ladite bague de poulie (3), lesdites secondes parties (22, 23) desdits supports (14, 15) étant configurées de manière à ce qu'elles interagissent avec des éléments respectifs (8, 9) qui sont d'un seul tenant avec ledit moyeu (2).

11. Poulie selon la revendication 10, **caractérisée en ce que** lesdits éléments d'un seul tenant avec ledit moyeu (2) sont constitués par des embases annulaires (8, 9) sur lesquelles des paliers de support respectifs (4, 5) de ladite bague de poulie (3) sont montés.

12. Poulie selon l'une quelconque des revendications qui précèdent, **caractérisée en ce qu'**elle comprend un moyen d'amortissement (18, 19) des rotations relatives entre lesdits supports (14, 15) et au moins un élément constitutif pris parmi ledit moyeu (2) et ladite bague de poulie (3).
